# DEMANDE DE BREVET EUROPEEN

(11) **EP 2 797 061 A1**
(43) Date de publication de la demande: **29.10.2014**
(21) Numéro de dépôt: 13165189.5
(22) Date de dépôt: 24.04.2013
(51) Int. Cl.: G08C 17/02

(54) **Système à multiples appareils à communication simplifiée**

(71) Demandeur: The Swatch Group Research and Development Ltd., 2074 Marin (CH)
(72) Inventeur: Rota, Sergio, 2013 Colombier (CH); Randjelovic, Zoran, 2074 Marin (CH)
(74) Mandataire: Ravenel, Thierry Gérard Louis

(57) **Abrégé**

La présente invention concerne un système (1) comprenant au moins un premier appareil (10) donneur d'ordre et au moins un second appareil (20) receveur d'ordre, chacun comprenant une unité de contrôle (11, 21) et une unité de communication (12, 22) à courtes distances à onde radio, ledit système étant prévu pour utiliser au moins un premier profil fonctionnel (PRO1) permettant l'exécution d'une première fonction (FCT1), ledit premier profil permettant audit premier appareil de générer un premier message codée (MOT1), ladite première fonction étant exécutée par ledit au moins un second appareil receveur d'ordre suite à la réception du premier message codée par ledit second appareil, caractérisé en ce que le système est configuré pour que le second appareil receveur d'ordre puisse exécuter une seconde fonction (FCT2) en réponse à la réception du premier message codé.

## Description

La présente invention concerne un système comprenant au moins un premier appareil donneur d'ordre et au moins un second appareil receveur d'ordre, chacun comprenant une unité de contrôle et une unité de communication à courtes distances à onde radio, ledit système étant prévu pour utiliser au moins un premier profil fonctionnel permettant l'exécution d'une première fonction, ledit premier profil permettant audit premier appareil de générer un premier message codée, ladite première fonction étant exécutée par ledit au moins un second appareil receveur d'ordre suite à la réception du premier message codée par ledit second appareil.

### ARRIERE PLAN TECHNOLOGIQUE

Le protocole Bluetooth est une spécification de l'industrie des télécommunications. Elle utilise une technique radio courte distance destinée à simplifier les connexions entre les appareils électroniques. Elle a été conçue dans le but de remplacer les câbles entre les ordinateurs et les imprimantes. Ce protocole s'est étendu aux appareils électroniques nomades comme les lecteurs de musique portable, les téléphones.

Cette spécification permet aux appareils de communiquer à courtes distances afin d'échanger des donner ou des commandes. Par exemple, le protocole Bluetooth permet à un ordinateur d'être connecté à une souris sans fil. Le protocole Bluetooth est un standard de sorte à avoir une interopérabilité entre les différentes marques parties prenantes ou utilisatrices du protocole Bluetooth.

Dans le cadre du protocole Bluetooth, de nombreux profils sont créés. Un profil correspond à une spécification fonctionnelle d'un usage particulier c'est-à-dire à une fonction. Les profils peuvent également correspondre à différents types de périphériques. Les profils ont pour but d'assurer une interopérabilité entre tous les appareils Bluetooth.

Ainsi, un profil concernant une fonction est utilisé dans tous les appareils qui utilisent cette fonction de sorte que, peu importe la marque du produit, cette fonction est toujours activable. Ces profils définissent :
- la manière d'implémenter un usage défini
- les protocoles spécifiques à utiliser
- les contraintes et les intervalles de valeurs de ces protocoles

Un inconvénient de ce système est que la création d'une nouvelle fonction nécessite la création d'un nouveau profil avec toute la complexité que cela implique. En effet, cette opération de création d'un profil nécessite la prise en compte de contraintes comme celle d'interopérabilité entre tous les appareils Bluetooth utilisant cette fonction. Une telle création de profil engendre alors un coûts important en argent et en temps.

### RESUME DE L'INVENTION

L'invention a pour but de pallier les inconvénients de l'art antérieur en proposant de fournir un système utilisant la technologie Bluetooth dont le fonctionnement et l'intégration de nouvelles fonctions est plus simple.

A cet effet, la présente invention concerne un système comprenant au moins un premier appareil donneur d'ordre et au moins un second appareil receveur d'ordre, chacun comprenant une unité de contrôle et une unité de communication à courtes distances à onde radio, ledit système étant prévu pour utiliser au moins un premier profil fonctionnel permettant l'exécution d'une première fonction, ledit premier profil permettant audit premier appareil de générer un premier message codée, ladite première fonction étant exécutée par ledit au moins un second appareil receveur d'ordre suite à la réception du premier message codée par ledit second appareil, **caractérisé en ce que** le système est configuré pour que le second appareil receveur d'ordre puisse exécuter une seconde fonction en réponse à la réception du premier message codé.

Dans un premier mode de réalisation avantageux, le premier profil permet audit premier appareil de générer un premier message codée et un second message codé permettant d'exécuter respectivement une première fonction et une seconde fonction.

Dans un second mode de réalisation avantageux, la première fonction est une fonction recherche d'objet et en ce que la seconde fonction est une fonction photo.

Dans un troisième mode de réalisation avantageux, le premier appareil est une montre et en ce que le second appareil est une tablette tactile.

Dans un autre mode de réalisation avantageux, le premier appareil est une tablette tactile et en ce que le second appareil est une montre.

Dans un autre mode de réalisation avantageux, le système comprend au moins un premier appareil donneur d'ordre et au moins deux seconds appareils receveur d'ordre chacun apte à exécuter une fonction en réponse à la réception du premier message codé et en ce que ledit premier appareil est agencé pour envoyer ledit premier message codée spécifiquement à un seul des second appareil receveur d'ordre.

### BREVE DESCRIPTION DES FIGURES

Les buts, avantages et caractéristiques du système selon la présente invention apparaîtront plus clairement dans la description détaillée suivante d'au moins une forme de réalisation de l'invention donnée uniquement à titre d'exemple non limitatif et illustrée par les dessins annexés sur lesquels :
- La figure 1 représente schématiquement un système d'appareils selon l'invention ;
- La figure 2 représente schématiquement le fonctionnement d'un système d'appareils selon l'invention ;
- La figure 3 représente schématiquement une variante du fonctionnement d'un système d'appareils selon l'invention ;

### DESCRIPTION DETAILLEE

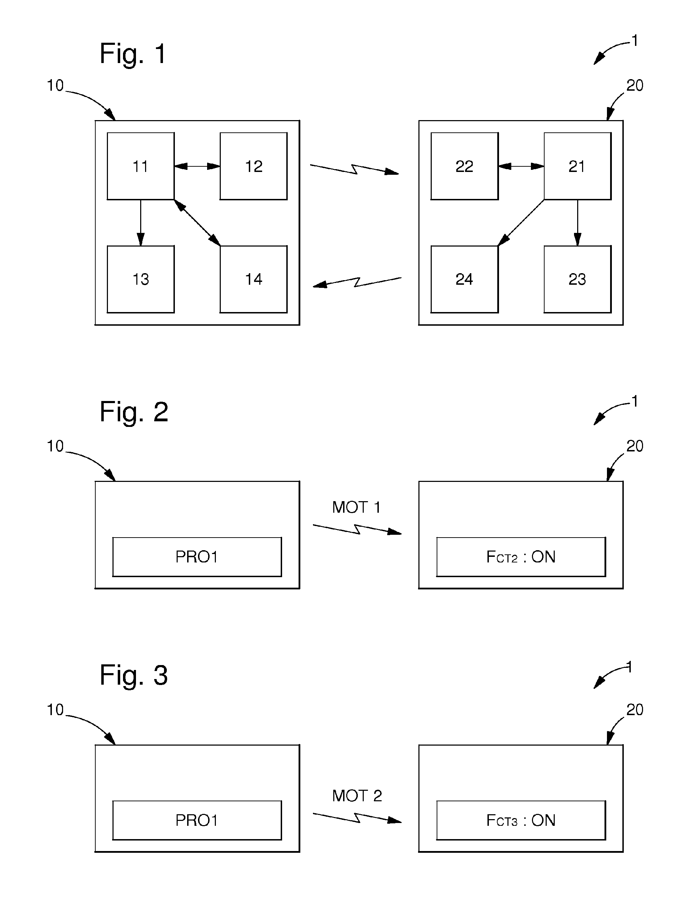

Sur la figure 1 est représenté un système selon la présente invention. Ce système 1 comprend au moins deux appareils 10, 20 comme un téléphone mobile ou un ordinateur ou une tablette tactile ou une montre. On comprend que le système comporte un premier appareil 10 et un second appareil 20.

Chacun de ses appareils est muni d'une unité centrale 11, 21 pour commander ledit appareil, une zone mémoire 13, 23 pour le stockage des données et des instructions et d'un circuit de communication 12, 22 capable de recevoir et de transmettre des données ou commandes. Ce circuit de communication 12, 22 est agencé pour fonctionner selon un protocole de communication particuliers comme le protocole Bluetooth utilisé pour les courtes distances et utilisant une fréquence de 2.4 GHz. Chacun des appareils 10, 20 comprend en outre des moyens d'affichage 14, 24. On considèrera que le système 1 comprend un appareil donneur d'ordre qui sera le premier appareil 10 et un appareil receveur d'ordre qui sera le second appareil 20.

Dans la suite de la description, on prendra comme exemple un système 1 de deux appareils comme une montre électronique tactile et une tablette tactile de type Ipad^{®}. La montre électronique est munie d'un écran LCD pour l'affichage et des touches tactiles et/ou classiques pour la commande. La tablette tactile est munie d'un écran LCD tactile et d'une caméra pour la vision conférence ou pour faire de la photo. La montre électronique est un premier appareil utilisé pour commander le second appareil qui est la tablette tactile.

Ces appareils 10, 20 sont également configurés pour être capable d'exécuter un certain nombre de fonctions. On comprend alors que de multiples profils PRO sont utilisés pour ces diverses fonctions.

Ces profils PRO se présentent sous une forme logicielle et présentent une première partie intégrée au premier appareil 10 et une seconde partie intégrée au second appareil 20. On considèrera que la première partie est incluse dans l'appareil donneur d'ordre ou premier appareil 10 et que la seconde partie est incluse dans l'appareil receveur d'ordre ou second appareil 20. De ce fait, les première et seconde parties coopèrent ensemble de sorte que le premier appareil 10 et notamment la première partie du profil utilisé d'ordre envoie une commande qui sera interprétée par la seconde partie du profil utilisé.

Avantageusement selon l'invention, le second appareil 20 ou appareil receveur d'ordre est programmé pour que la seconde partie du profil exécute une fonction autre que celle lié audit profil. On comprend par-là que le système 1 muni des deux appareils 10, 20 est configuré pour utiliser un premier profil PRO1 utilisé pour le fonctionnement d'une première fonction FCT1 mais que l'appareil receveur d'ordre utilise ce premier profil PRO1 pour activer une seconde fonction FCT2 comme visible à la figure 2. Par exemple, le profil utilisé pour la fonction de recherche de clé est utilisé pour une photo.

En effet, pour une telle fonction de recherche de clé, le fonctionnement est comme suit. Lorsque la fonction est activée, l'appareil donneur d'ordre envoie un message codé MOT1 à l'appareil receveur d'ordre lui indiquant que la fonction est activée. De ce fait, les deux appareils vont utiliser le protocole Bluetooth pour déterminer la distance entre eux de sorte que si cette distance dépasse une valeur préprogrammée, l'appareil receveur d'ordre 20 émet un signal lumineux ou sonore. Le message codé MOT1 est donc le message spécifique au profil PRO1.

L'invention consiste donc à utiliser ce message codé MOT1 pour une seconde fonction FCT2.

Par conséquent, la seconde partie du profil est modifiée pour qu'une seconde fonction FCT2 soit exécutée au lieu de la première fonction FCT1. Par exemple, cette seconde partie peut être téléchargée via une application gratuite ou payante ou directement intégrée au logiciel de fonctionnement de l'appareil.

La première étape est d'activer la seconde fonction FCT2 c'est à dire que l'application correspondante est en fonctionnement sans réaliser d'opération. Cette seconde fonction FCT2 peut être en fonctionnement dès l'allumage de l'appareil receveur d'ordre 20. La deuxième étape se produit lorsque l'appareil receveur d'ordre 20 reçoit le message codé MOT1, ledit appareil receveur d'ordre 20 va alors réaliser les opérations de la fonction. Dans l'exemple où la seconde fonction FCT2 est une fonction de prise de photo, la première étape consiste à enclencher l'application photo de l'appareil receveur d'ordre 20. La seconde étape consiste, après avoir reçu le message codé MOT1, à faire fonctionner la fonction photo c'est à dire à prendre une photo avec la caméra dudit appareil.

Dans une variante visible à la figure 3, le profil utilisé est un profil à plusieurs niveaux. Un profil à plusieurs niveaux est un profil qui peut communiquer avec plusieurs messages codés MOT1, MOT2, etc...

Cette variante possède ainsi l'avantage de permettre d'utiliser le même profil pour différente fonction. En effet, les différentes fonctions de l'appareil receveur d'ordre 20 sont programmées pour réagir à un seul des messages codés du profil. Par exemple, un premier profil PRO1 présente deux messages codés MOT1 et MOT2. Les fonctions peuvent être programmées pour que le premier message codé MOT1 soit utilisé pour une première fonction FCT1 et pour que le second message codé MOT2 soit utilisé avec une seconde fonction FCT2. Dès lors, si les deux fonctions sont activées, la réception du premier message codé MOT1 ou du second message codé MOT2 entrainera l'exécution de la première fonction FCT1 ou de la seconde fonction FCT2.

Dans une autre variante, plusieurs appareils receveur d'ordre 20 peuvent être compris dans le système 1. Chacun de ces appareils receveur d'ordre 20 est apte à exécuter une fonction FCT réagissant au premier message codé MOT1 généré par le premier profil PRO1 du premier appareil. Ces fonctions FCT peuvent être différentes d'un appareil receveur d'ordre 20 à un autre.

Ainsi, l'appareil donneur d'ordre 10 est configuré pour être capable d'envoyer le premier mot codé MOT1 à un seul des appareils receveur d'ordre 20.

Par conséquent, lorsque l'utilisateur utilise l'appareil donneur d'ordre 10 pour sélectionner et activer une fonction FCT, l'appareil donneur d'ordre 10 sélectionne préalablement l'appareil receveur d'ordre 20 adéquate et lui envoie le premier message codé MOT1 afin que l'appareil receveur d'ordre 20 sélectionné puisse exécuter sa fonction. On comprendra que le premier message codée MOT1 peut comprendre un code que seul l'appareil receveur d'ordre 20 adéquate peut lire et interpréter.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

## Revendications

1. Système (1) comprenant au moins un premier appareil (10) donneur d'ordre et au moins un second appareil (20) receveur d'ordre, chacun comprenant une unité de contrôle (11, 21) et une unité de communication (12, 22) à courtes distances à onde radio, ledit système étant prévu pour utiliser au moins un premier profil fonctionnel (PRO1) permettant l'exécution d'une première fonction (FCT1), ledit premier profil permettant audit premier appareil de générer un premier message codée (MOT1), ladite première fonction étant exécutée par ledit au moins un second appareil receveur d'ordre suite à la réception du premier message codée par ledit second appareil, **caractérisé en ce que** le système est configuré pour que le second appareil receveur d'ordre puisse exécuter une seconde fonction (FCT2) en réponse à la réception du premier message codé.

2. Système selon la revendication 1, **caractérisé en ce que** le premier profil (PRO1) permet audit premier appareil de générer un premier message codée (MOT1) et un second message codée (MOT2) permettant d'exécuter respectivement une première fonction (FCT1) et une seconde fonction (FCT2).

3. Système selon les revendications 1 ou 2, **caractérisé en ce que** la première fonction (FCT1) est une fonction recherche d'objet et **en ce que** la seconde fonction (FCT2) est une fonction photo.

4. Système selon l'une des revendications 1 à 3, **caractérisé en ce que** le premier appareil (10) est une montre et **en ce que** le second appareil (20) est une tablette tactile.

5. Système selon l'une des revendications 1 à 3, **caractérisé en ce que** le premier appareil (10) est une tablette tactile et **en ce que** le second appareil (20) est une montre.

6. Système selon la revendication 1, **caractérisé en ce qu'il** comprend au moins un premier appareil (10) donneur d'ordre et au moins deux seconds appareils (20) receveur d'ordre chacun apte à exécuter une fonction en réponse à la réception du premier message codé et **en ce que** ledit premier appareil (10) est agencé pour envoyer ledit premier message codée spécifiquement à un seul des second appareil (20) receveur d'ordre.
